# EUROPÄISCHE PATENTSCHRIFT

(11) **EP 2 792 622 B1**
(45) Veröffentlichungstag und Bekanntmachung des Hinweises auf die Patenterteilung: **11.01.2017**
(21) Anmeldenummer: 14164394.0
(22) Anmeldetag: 11.04.2014
(51) Int. Cl.: B65G 29/02, B65G 47/248, B65B 25/06

(54) **Verfahren und Vorrichtung zum Umorientieren einer Scheibe oder einer Portion eines aufgeschnittenen Lebensmittelprodukts**
Method and device for reorienting a slice or a portion of a sliced food product
Procédé et dispositif de réorientation d'une tranche ou d'une portion d'un produit alimentaire découpé

(30) Priorität: 15.04.2013 DE 102013206698
(43) Veröffentlichungstag der Anmeldung: 22.10.2014
(73) Patentinhaber: Weber Maschinenbau GmbH Breidenbach, 35236 Breidenbach (DE)
(72) Erfinder: Ingo Rother, 35236 Breidenbach (DE)
(74) Vertreter: Manitz, Finsterwald & Partner GbR

(56) Entgegenhaltungen:
- DE-A1-102008 017 420
- DE-U1- 20 219 892
- GB-A- 1 305 270
- US-A- 4 699 564
- US-B1- 6 398 008

## Beschreibung

Die vorliegende Erfindung betrifft ein Verfahren und eine Vorrichtung zum Umorientieren, insbesondere zum Wenden, einer Scheibe oder einer mehrere Scheiben umfassenden Portion, insbesondere eines mittels eines Hochgeschwindigkeitsslicers aufgeschnittenen Lebensmittelprodukts.

Eine aus dem Stand der Technik bekannte Vorrichtung zum Wenden einer Scheibe oder Portion eines aufgeschnittenen Lebensmittelprodukts ist mit Bezug auf die Figuren 6 und 7 in der DE 10 2008 006 333 A1 beschrieben. Die dort beschriebene Wendevorrichtung 50 weist ein erstes und zweites Wendeband 53, 54 auf, die übereinander liegen und einen Zwischenraum 55 bilden, in den eine zu wendende Scheibe oder Portion gebracht werden kann. Zum Wenden der Scheibe oder Portion werden die beiden Wendebänder 53, 54 um eine sich senkrecht zur Produktförderrichtung erstreckende, horizontale Welle 57 um 180 Grad gedreht.

Die DE 10 2008 017 420 A1 offenbart eine Vorrichtung gemäß dem Oberbegriff des Anspruchs 1 und ein Verfahren gemäß dem Oberbegriff des Anspruchs 13.

Weiterer Stand der Technik ist aus US 4 699 564 A, DE 202 19 892 U1, GB 1 305 270 A und US 6 398 008 B1 bekannt.

Der vorliegenden Erfindung liegt die Aufgabe zugrunde, ein verbessertes Verfahren und eine verbesserte Vorrichtung zum Umorientieren, insbesondere zum Wenden, einer Scheibe oder einer mehrere Scheiben umfassenden Portion bereitzustellen, die einfach und kostengünstig realisierbar sind und einen hohen Produktdurchsatz erlauben.

Die Aufgabe wird durch eine Vorrichtung mit den Merkmalen des unabhängigen Vorrichtungsanspruchs sowie durch ein Verfahren mit den Merkmalen des unabhängigen Verfahrensanspruchs gelöst. Bevorzugte Ausführungsformen und Weiterbildungen der Erfindung sind in den abhängigen Ansprüchen, der Beschreibung sowie den Figuren angegeben.

Eine erfindungsgemäße Vorrichtung zum Umorientieren, insbesondere zum Wenden, einer Scheibe oder einer mehrere Scheiben umfassenden Portion, insbesondere eines mittels eines Hochgeschwindigkeitsslicers aufgeschnittenen Lebensmittelprodukts, umfasst eine erste Fördereinrichtung, die eine erste Auflagefläche aufweist, und eine zweite Fördereinrichtung, die eine der ersten Auflagefläche zugewandte zweite Auflagefläche aufweist, wobei die beiden Fördereinrichtungen gemeinsam um eine zumindest näherungsweise in Förderrichtung verlaufende Drehachse um einen Umorientierungswinkel verdrehbar sind.

Bei der aus dem angegebenen Stand der Technik bekannten Wendevorrichtung sind die Wendebänder um eine quer zur Förderrichtung verlaufende Welle verdrehbar, um eine Scheibe oder Portion zu wenden. Dagegen liegt der vorliegenden Erfindung der Gedanke zugrunde, dass eine Scheibe oder Portion mittels zweier Fördereinrichtungen durch eine Verdrehung um eine im Wesentlichen in Förderrichtung verlaufende Drehachse umorientiert bzw. bei einem Umorientierungswinkel von zumindest näherungsweise 180 Grad gewendet werden kann.

Die erfindungsgemäße Vorrichtung kann mit geringem Aufwand und geringem Platzbedarf realisiert werden, da sich die Drehachse zumindest näherungsweise in Förderrichtung und damit parallel zur Längsrichtung der Fördereinrichtungen erstreckt, so dass die Fördereinrichtungen zur Durchführung einer Drehbewegung nur wenig Platz benötigen.

Die beiden Fördereinrichtungen fördern erfindungsgemäß die Scheibe oder Portion längs der Förderrichtung auch während eines Umorientierungsvorgangs, also während die Fördereinrichtungen um die Drehachse gedreht werden. Dabei ist an der erfindungsgemäßen Vorrichtung vorteilhaft, dass die Förderrichtung vor, während und nach einer Drehung gleich bleibt, so dass die Scheibe oder Portion ohne Unterbrechung gefördert werden kann und insbesondere ohne dass die Laufrichtung der Fördereinrichtungen geändert oder gar umgekehrt werden muss.

Außerdem lässt sich die erfindungsgemäße Vorrichtung einfach implementieren, da abgesehen von einer entsprechenden Steuerung im Wesentlichen nur die beiden Fördereinrichtungen bereitgestellt werden müssen, die ohne Weiteres in eine einem Slicer nachgeordnete Förderstrecke integriert werden können.

Die erfindungsgemäße Vorrichtung kann, wie erwähnt, nicht nur zum Wenden, sondern allgemein zum Umorientieren einer Scheibe oder Portion eines aufgeschnittenen Lebensmittelprodukts um einen prinzipiell beliebigen Umorientierungswinkel eingesetzt werden. Beispielsweise könnte eine von einem dicken Käseblock gebildete Scheibe um 90 Grad gedreht werden, bevor diese zum Beispiel einer nachgeordneten Verpackungseinrichtung zugeführt wird.

Besonders vorteilhaft lässt sich die erfindungsgemäße Vorrichtung zum Wenden einer Scheibe oder Portion einsetzen, wobei der Umorientierungswinkel zum Wenden zumindest näherungsweise 180 Grad beträgt. Durch eine Drehung der beiden Fördereinrichtungen um einen Umorientierungswinkel von etwa 180 Grad werden die Positionen der beiden Auflageflächen relativ zueinander vertauscht und eine zwischen den beiden Auflageflächen angeordnete Scheibe oder Portion wird dabei gewendet. Dabei liegt bei einer gewendeten Scheibe oder Portion eine zuvor unten liegende Seite der Scheibe oder Portion nach dem Wendevorgang oben.

Bevorzugt sind die beiden Fördereinrichtungen quer zur Förderrichtung betrachtet versetzt zueinander angeordnet. Dadurch kann auf einfache Weise eine Anordnung realisiert werden, bei der die beiden Auflageflächen einander zugewandt sind und bei der die Scheibe oder Portion zwischen den beiden Auflageflächen aufgenommen werden kann.

Beispielsweise kann sich die erste Fördereinrichtung mit horizontal ausgerichteter, nach oben weisender erster Auflagefläche unterhalb der zweiten Fördereinrichtung mit einer ebenfalls horizontal ausgerichteten, aber nach unten weisenden zweiten Auflagefläche befinden und die Scheibe oder Portion kann längs der horizontal verlaufenden Förderrichtung zwischen die beiden Auflageflächen gefördert werden, so dass sie auf der ersten Auflagefläche aufliegt. Zum Wenden der Scheibe oder Portion werden die beiden Fördereinrichtungen sodann um etwa 180 Grad um die Drehachse gedreht, wodurch die Positionen der beiden Fördereinrichtungen vertauscht werden und die gewendete Scheibe oder Portion auf der zweiten, nun unten liegenden und nach oben weisenden zweiten Auflagefläche der zweiten Fördereinrichtung liegt.

Vorzugsweise sind die beiden Fördereinrichtungen gleich aufgebaut. Der Aufbau der Vorrichtung kann dadurch insgesamt vereinfacht werden.

Die beiden Fördereinrichtungen können bezüglich der Drehachse symmetrisch aufgebaut und angeordnet sein, wodurch der Aufbau der Vorrichtung besonders einfach realisiert werden kann.

Besonders vorteilhaft ist es, wenn die beiden Fördereinrichtungen in Förderrichtung betrachtet gleich lang sind, so dass beide Fördereinrichtungen - was den Transport der Scheibe oder Portion in Förderrichtung betrifft - gleichwertig einsetzbar sind. Beispielsweise kann jede der beiden Fördereinrichtungen zum Übernehmen einer Scheibe oder Portion von einem vorgeordneten Eingangsförderer und zum Übergeben der Scheibe oder Portion an einen nachgeordneten Ausgangsförderer eingesetzt werden.

Nach einer bevorzugten Ausgestaltung der Erfindung weist jede der beiden Fördereinrichtungen ein umlaufendes Förderband oder mehrere parallele umlaufende Förderbänder auf, wobei das Förderband bzw. die Förderbänder der jeweiligen Fördereinrichtung die jeweilige erste bzw. zweite Auflagefläche bildet bzw. bilden. Dadurch können die Fördereinrichtungen besonders einfach realisiert werden. Dabei sind unter "Förderbändern" auch schmale "Förderriemen" zu verstehen, d.h. bei den mehreren parallel umlaufenden Förderbändern kann es sich auch um mehrere parallel umlaufende Förderriemen handeln. Ein solcher Förderer wird auch als Multistreifenförderer bezeichnet.

Bevorzugt ist das Förderband bzw. sind die Förderbänder der ersten Fördereinrichtung relativ zu dem Förderband bzw. den Förderbändern der zweiten Fördereinrichtung mit umgekehrtem Drehsinn und mit der betragsmäßig gleichen Geschwindigkeit betreibbar. Dadurch kann besonders einfach erreicht werden, dass sich die beiden Auflageflächen der beiden Fördereinrichtungen mit derselben Geschwindigkeit in Förderrichtung bewegen und eine dazwischen angeordnete Scheibe oder Portion von beiden Fördereinrichtungen längs der Förderrichtung gefördert werden kann.

Vorzugsweise ist den beiden Fördereinrichtungen in Förderrichtung betrachtet ein, insbesondere ein umlaufendes Förderband oder mehrere parallele umlaufende Förderbänder aufweisender, Eingangsförderer vorgeordnet. Mittels des Eingangsförderers kann die umzuorientierende bzw. zu wendende Scheibe oder Portion den beiden Fördereinrichtungen längs der Förderrichtung zugeführt werden.

Bevorzugt ist den beiden Fördereinrichtungen in Förderrichtung betrachtet ein, insbesondere ein umlaufendes Förderband oder mehrere parallele umlaufende Förderbänder aufweisender, Ausgangsförderer nachgeordnet. Mittels des Ausgangsförderers kann die umorientierte bzw. gewendete Scheibe oder Portion längs der Förderrichtung weitertransportiert und beispielsweise einer Verpackungseinrichtung zugeführt werden.

Während des Umorientierens bzw. Wendens der Scheibe oder Portion führen die beiden Fördereinrichtungen eine Drehbewegung um die gemeinsame Drehachse aus. Dabei neigen sich die Auflageflächen der Fördereinrichtungen zur Seite bzw. die Auflageflächen werden umgedreht. Um dabei zu verhindern, dass die Scheibe oder Portion verrutscht, können die Auflageflächen aneinander anliegen oder in einem geringen Abstand voneinander beabstandet sein. Der Abstand kann beispielweise so gewählt sein, dass dieser gleich oder etwas kleiner ist wie die normalerweise zu erwartende Dicke einer Scheibe oder Portion. Beispielsweise kann der Abstand gleich oder kleiner sein als 1 cm, als 2 cm, als 5 cm, als 10 cm oder als 15 cm. Eine umzuorientierende bzw. zu wendende Scheibe oder Portion kann somit gewissermaßen zwischen die Auflageflächen eingeklemmt bzw. eingespannt und gegen Verrutschen gesichert werden. Die Scheibe bzw. Portion wird somit zwischen den beiden Fördereinrichtungen gehalten. Dabei ist es besonders vorteilhaft, wenn die Auflageflächen elastisch sind, um eine sich von Scheibe zu Scheibe bzw. Portion zu Portion ändernde Dicke ausgleichen zu können.

Es kann vorgesehen sein, dass sich der Abstand zwischen den beiden Auflageflächen in Förderrichtung gesehen verkleinert. Die Fördereinrichtungen sind somit längs der Förderrichtung gesehen aufeinander zu geneigt, so dass die beiden Auflageflächen auch aufeinander zu laufen können.

Bei einer bevorzugten Ausgestaltung der Erfindung kann ein Abstand zwischen der ersten und zweiten Auflagefläche veränderbar sein. Beispielsweise kann der Abstand an die Höhe der Scheibe oder Portion angepasst werden, so dass die Scheibe oder Portion an ihrer Ober- und Unterseite von den beiden Auflageflächen sicher gehalten werden kann.

Vorteilhaft ist es, wenn ein Förderniveau der Fördereinrichtungen und ein Förderniveau eines in Förderrichtung betrachtet vorgeordneten Eingangsförderers aneinander angepasst werden können. Das Förderniveau kann somit zwischen dem Eingangsförderer und den Fördereinrichtungen auf dieselbe Höhe eingestellt werden, so dass die Scheibe oder Portion sicher vom Eingangsförderer zu den Fördereinrichtungen, insbesondere zwischen die beiden Auflageflächen, transportiert werden kann.

Besonders einfach kann das Förderniveau des Eingangsförderers an das Förderniveau der Fördereinrichtungen angepasst werden, wenn der Eingangsförderer als Wippe ausgestaltet ist.

Vorzugsweise sind das Förderniveau der Fördereinrichtungen und ein Förderniveau eines in Förderrichtung betrachtet nachgeordneten Ausgangsförderers aneinander anpassbar. Die umorientierte bzw. gewendete Scheibe kann somit problemlos zum Ausgangsförderer transportiert werden. Eine Anpassung der Förderniveaus ist besonders einfach, wenn der Ausgangsförderer als Wippe ausgestaltet ist.

Mit Förderniveau ist dabei die vertikale Höhe, zum Beispiel über dem Boden, gemeint, auf der der Eingangsförderer bzw. die Fördereinrichtungen bzw. der Ausgangsförderer die Scheibe oder Portion längs der Förderrichtung fördern.

Die beiden Fördereinrichtungen können in vertikaler Richtung gemeinsam verfährbar, insbesondere absenkbar und anhebbar, sein. Dadurch kann ebenfalls auf einfache Weise das Förderniveau der Fördereinrichtungen an das Förderniveau des Eingangsförderers und/oder des Ausgangsförderers angepasst werden.

Die Drehachse kann in vertikaler Richtung verstellbar, insbesondere absenkbar und anhebbar, sein, wodurch ebenfalls eine Anpassung des Förderniveaus der Fördereinrichtungen an das Förderniveau des Eingangsförderers und/oder des Ausgangsförderers auf einfache Weise möglich ist.

Bevorzugt ist ein um die Drehachse drehbarer Rahmen vorgesehen, an dem die Fördereinrichtungen befestigt sind und der mit einem Antrieb zum Verdrehen der beiden Fördereinrichtungen gekoppelt ist. Dadurch kann eine einfache Kopplung zwischen den Fördereinrichtungen und dem Antrieb bewerkstelligt werden.

Der Rahmen kann wenigstens ein, bevorzugt an wenigstens einer Seite offenes oder ringförmiges, Rahmenelement aufweisen, das in einer senkrecht zur Förderrichtung verlaufenden Ebene um die beiden Fördereinrichtungen herum verläuft und an mehreren, insbesondere ortsfesten, versetzt zueinander angeordneten Führungsrollen drehbar gelagert ist. Dadurch kann auf einfache Weise eine Drehbarkeit der beiden Fördereinrichtungen um die insbesondere konzentrisch zum Rahmenelement verlaufende Drehachse realisiert werden, die bevorzugt zwischen den beiden Fördereinrichtungen liegt.

Dabei kann ein an einer Seite offenes Rahmenelement insbesondere als C-förmiges oder teilringförmiges Rahmenelement ausgestaltet sein. Derartige Rahmenelemente bieten den Vorteil, dass ein umlaufendes Förderband besonders einfach an einer Fördereinrichtung montiert bzw. demontiert werden kann. Entsprechendes gilt für mehrere parallele umlaufende Förderbänder.

Bei einer erfindungsgemäßen Ausführungsform verläuft die gemeinsame Drehachse der beiden Fördereinrichtungen seitlich versetzt zu einer Mittelachse der beiden Fördereinrichtungen, und die beiden Fördereinrichtungen sind mit einer Querversatzausgleichseinrichtung gekoppelt, mittels der ein von einer Verdrehung der beiden Fördereinrichtungen um die Drehachse bewirkter Querversatz kompensiert werden kann.

Die Erfindung betrifft auch ein Verfahren zum Umorientieren, insbesondere Wenden, einer Scheibe oder einer mehrere Scheiben umfassenden Portion, insbesondere eines mittels eines Hochgeschwindigkeitsslicers aufgeschnittenen Lebensmittelprodukts, bei dem die Scheibe oder Portion zwischen eine erste Auflagefläche einer ersten Fördereinrichtung und eine der ersten Auflagefläche zugewandte zweite Auflagefläche einer zweiten Fördereinrichtung gebracht wird, und bei dem die beiden Fördereinrichtungen gemeinsam um eine zumindest näherungsweise in Förderrichtung verlaufende Drehachse um einen Umorientierungswinkel gedreht werden.

Insbesondere werden die beiden Fördereinrichtungen zum Wenden der Scheibe oder Portion um näherungsweise 180 Grad gedreht. Bevorzugt wird die Scheibe oder Portion, insbesondere während der Drehbewegung, von den beiden Auflageflächen gehalten. Erfindungsgemäß wird die Scheibe oder Portion während der Drehbewegung in Förderrichtung gefördert.

Die Erfindung wird nachfolgend rein beispielhaft unter Bezugnahme auf die beiliegenden Zeichnungen beschrieben. Es zeigen, jeweils schematisch,
- Fig. 1: eine seitliche Schnittansicht einer erfindungsgemäßen Vorrichtung,
- Fig. 2: eine Draufsicht auf die Vorrichtung von Fig. 1,
- Fig. 3A: eine geschnittene Frontansicht der Vorrichtung von Fig. 1,
- Fig. 3B: eine geschnittene Frontansicht einer anderen Variante der Vorrichtung von Fig. 1,
- Fig. 4: eine weitere seitliche Schnittansicht der Vorrichtung von Fig. 1, und
- Fig. 5: eine Draufsicht auf eine andere Ausführungsform einer erfindungsgemäßen Vorrichtung.

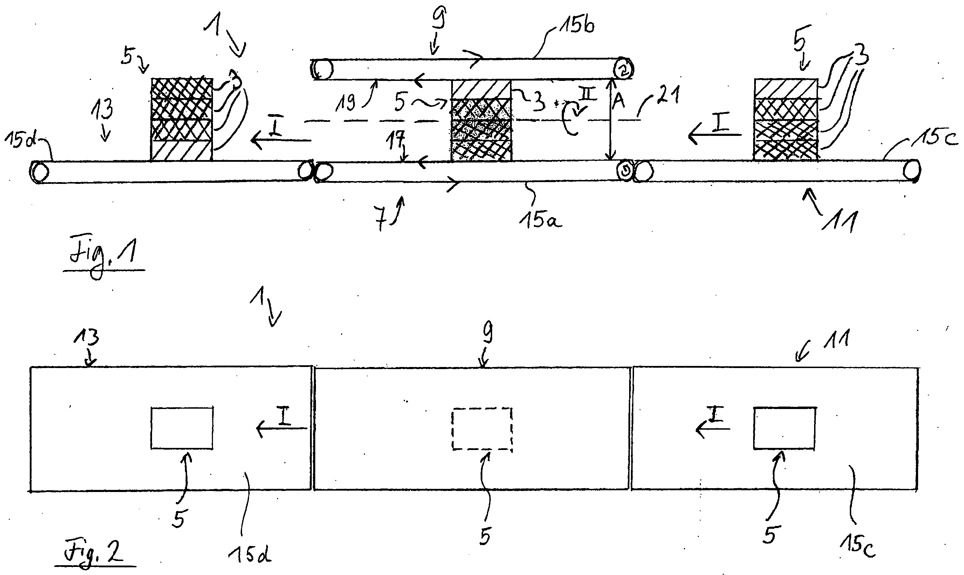

Die Vorrichtung 1 weist eine erste Fördereinrichtung 7, eine über der ersten Fördereinrichtung 7 angeordnete zweite Fördereinrichtung 9, einen in Förderrichtung I den Fördereinrichtungen 7, 9 vorgeordneten Eingangsförderer 11 sowie einen in Förderrichtung I den Fördereinrichtungen 7, 9 nachgeordneten Ausgangsförderer 13 auf. Die erste Fördereinrichtung 7 umfasst ein erstes umlaufendes Förderband 15a mit einer ersten Auflagefläche 17, die in Fig. 1 nach oben weist. Die zweite Fördereinrichtung 9 weist ein zweites umlaufendes Förderband 15b mit einer zweiten Auflagefläche 19 auf, die in Fig. 1 nach unten weist, so dass sie der ersten Auflagefläche 17 zugewandt ist. Der Eingangsförderer 11 umfasst ein umlaufendes Förderband 15c und der Ausgangsförderer 13 umfasst ein umlaufendes Förderband 15d.

Der Eingangsförderer 11 ist in Förderrichtung I gesehen einer nicht gezeigten Vorrichtung zum Aufschneiden eines Lebensmittelprodukts, die auch als Slicer oder Hochgeschwindigkeitsslicer bezeichnet wird, nachgeordnet. Mittels der Aufschneidevorrichtung wird aus dem Lebensmittelprodukt ein Strom an aufgeschnittenen, jeweils aus mehreren Scheiben 3 bestehenden Portionen 5 erzeugt, die auf dem Förderband 15c des Eingangsförderers 11 liegend längs der Förderrichtung I gefördert und den Fördereinrichtungen 7, 9 zugeführt werden können.

Dabei wird eine den Fördereinrichtungen 7, 9 zugeführte Portion 5 zwischen den beiden Auflageflächen 17 und 19 aufgenommen, wie Fig. 1 zeigt. Die Portion 5 wird mittels der Fördereinrichtungen 7, 9 weiter längs der Förderrichtung I gefördert und entweder gleichzeitig oder mit Unterbrechung der Produktförderung gewendet. Die gewendete Portion 5 wird dann dem Ausgangsförderer 13 zugeführt, auf dessen Förderband 15d die gewendete Portion 5 liegend längs der Förderrichtung I weitertransportiert und zum Beispiel einer nicht gezeigten Verpackungseinrichtung zugeführt wird.

Wie gesagt, wird die zwischen den beiden Auflageflächen 17, 19 aufgenommene Portion 5 mittels der beiden Fördereinrichtungen 7, 9 gewendet. Dabei werden die beiden Fördereinrichtungen 7, 9 gemeinsam in einer Drehrichtung II um eine in Förderrichtung I verlaufende Drehachse 21 um einen Umorientierungswinkel, der zum Wenden 180 Grad beträgt, gedreht. Durch die Drehung vertauschen die beiden Fördereinrichtungen 7, 9 ihre in Fig. 1 dargestellten Positionen relativ zueinander. Nach der Drehung liegt somit die zweite Fördereinrichtung 9 unter der ersten Fördereinrichtung 7. Die vor dem Wenden unten liegende Seite der Portion 5 liegt nach dem Wenden oben, während die bisherige Oberseite der Portion 7 unten liegt, was in Fig. 1 anhand der unterschiedlich schraffierten Scheiben 3 der dargestellten Portionen 5 illustriert ist.

Nachdem die Portion 5 gewendet wurde, kann mittels des Eingangsförderers 11 eine weitere zu wendende Portion 5 zwischen die Fördereinrichtungen 7, 9 gebracht werden. Dies kann erfolgen, noch bevor oder auch erst nachdem die zuvor gewendete Portion 5 den Ausgangsförderer 13 erreicht hat. Nachdem die gewendete Portion 5 den Ausgangsförderer 13 erreicht hat und eine weitere Portion 5 den Fördereinrichtungen 7, 9 zugeführt wurde, werden die Fördereinrichtungen 7, 9 erneut in oder entgegen der Drehrichtung II um 180 Grad gedreht, um die weitere Portion 5 zu wenden, wobei die Fördereinrichtungen 7, 9 wiederum ihre in Fig. 1 gezeigten Positionen einnehmen.

Auf die vorstehend beschriebene Weise können alle Portionen 5 des über den Eingangsförderer 11 einlaufenden Produktstroms nach und nach gewendet werden. Es ist dabei auch möglich, dass einzelne Portionen 5 mittels der Fördereinrichtungen 7, 9 vom Eingangsförderer 11 zum Ausgangsförderer 13 transportiert werden, ohne dass sie gewendet werden. Außerdem ist es möglich, dass nicht nur jeweils immer eine Portion 5 gewendet wird. Vielmehr können auch mehrere hintereinander einlaufende Portionen 5 zunächst zwischen die beiden Fördereinrichtungen 7, 9 gebracht und dann gleichzeitig gewendet werden.

Die Auflageflächen 17, 19 werden zur Seite geneigt bzw. umgedreht, wenn die Fördereinrichtungen 7, 9 gedreht werden. Um dabei ein Verrutschen der dazwischenliegenden Portion 5 zu verhindern, wird diese zwischen die beiden Auflageflächen 17, 19 eingeklemmt bzw. eingespannt. Dies wird bei der beschriebenen Ausführungsform dadurch erreicht, dass die Förderbänder 15a, 15b elastisch ausgestaltet sind und der Abstand A zwischen den beiden Auflageflächen 17, 19 so gewählt ist, dass dieser gleich oder etwas kleiner ist wie die Dicke der zu wendenden Portionen 5. Vorzugsweise kann der Abstand zwischen den beiden Auflageflächen 17, 19 zum Beispiel mittels einer nicht gezeigten Steuereinrichtung eingestellt werden, um diesen an eine veränderliche Dicke der einlaufenden Portionen 5 anzupassen. Jede zu wendende Portion 5 kann somit sicher zwischen den beiden Auflageflächen 17, 19 gehalten werden. Alternativ kann der Abstand A der beiden Auflageflächen 17, 19 fest sein. Der Abstand A kann zum Beispiel einige Zentimeter betragen (zum Beispiel 5 cm oder 10 cm). Dickere Portionen können dabei aufgrund der Elastizität der Förderbänder 15a, 15b ohne Beschädigung zwischen den beiden Auflageflächen 17, 19 gehalten werden. Ferner können je nach Produktbeschaffenheit bzw. Produktkonsistenz Portionen oder einzelne Scheiben ohne Verrutschen gewendet werden, wenn sie an der unteren Auflagefläche anhaften und daher quasi erst im letzten Moment, also nachdem die Fördereinrichtungen 7, 9 schon fast um 180 Grad gedreht wurden, auf die nach der Drehung unten liegende Auflagefläche fallen.

Die Förderbänder 15a und 15b werden dabei, wie in Fig. 1 angedeutet ist, in umgekehrtem Drehsinn, also gegenläufig, und mit der betragsmäßig gleichen Geschwindigkeit betrieben. Auf diese Weise kann in besonders vorteilhafter Weise die zwischen den beiden Auflageflächen 17, 19 festgehaltene Portion 5 von beiden Auflageflächen 17, 19 mit derselben Geschwindigkeit in Förderrichtung I gefördert werden.

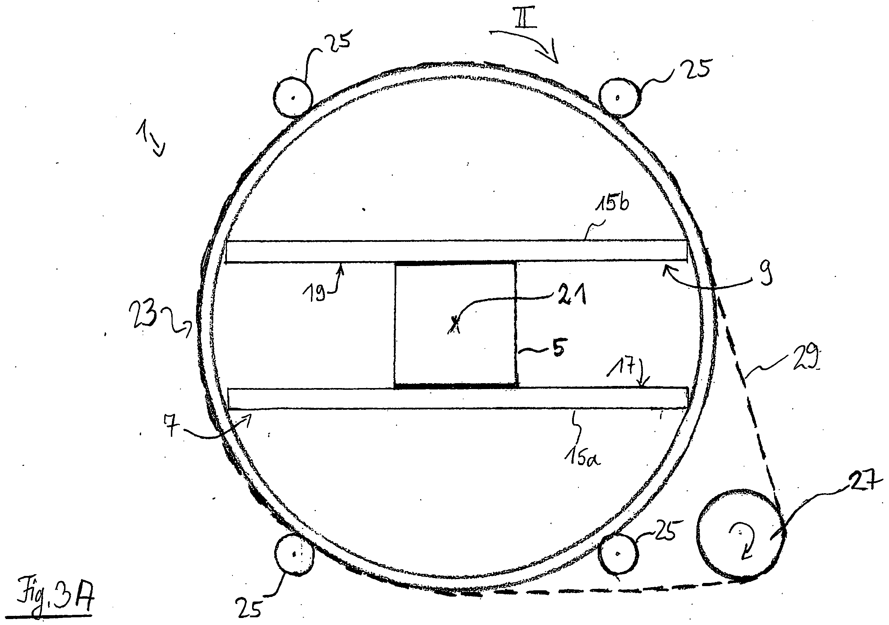

Bei der dargestellten Vorrichtung 1 sind, wie mit Bezug auf Fig. 3A erläutert wird, die beiden Fördereinrichtungen 7, 9 an zumindest zwei längs der Förderrichtung I versetzt zueinander angeordneten ringförmigen Rahmenelementen 23 eines drehbaren Rahmens befestigt. Dabei verläuft jedes Rahmenelement 23 in einer quer zur Förderrichtung I verlaufenden, der Bildebene der Fig. 3A entsprechenden Ebene um die Fördereinrichtungen 7, 9 herum und ist an mehreren ortsfesten Rollen 25 abgestützt.

Eine über einen nicht gezeigten Antrieb antreibbare Scheibe 27 ist mit einem Riemen 29 gekoppelt, der in Umfangsrichtung um das in Fig. 3A gezeigte Rahmenelement 23 herum geführt ist und eine Drehbewegung der Scheibe 27 auf das Rahmenelement 23 überträgt. Bei der Scheibe 27 kann es sich auch um ein Zahnrad handeln und der Riemen 29 kann ein Zahnriemen sein (nicht gezeigt). Über den so realisierten Riemenantrieb können die Fördereinrichtungen 7, 9 um die mit der Mittelachse der Rahmenelemente 23 zusammenfallenden Drehachse 21 in Drehrichtung II bzw. entgegen der Drehrichtung II gedreht werden. Der Riemenantrieb kann nur an einem der Rahmenelemente 23 wirksam sein. Alternativ kann der Riemenantrieb auf alle Rahmenelemente 23 wirken oder es kann für jedes Rahmenelement 23 ein eigener Antrieb vorgesehen sein, wobei die Antriebe derart angesteuert werden, dass sie gemeinsam den Rahmen in der gewünschten Weise verdrehen.

Wie Fig. 3A zeigt, kann sich die Portion 5 ebenfalls im Bereich der Drehachse 21 zwischen den beiden Fördereinrichtungen 7, 9 befinden bzw. die Drehachse 21 kann durch die Portion 5 hindurch verlaufen. Somit wirken keine oder nur geringe Zentrifugalkräfte auf die Portion 5, wenn die beiden Fördereinrichtungen 7, 9 um ihre gemeinsame Drehachse 21 verdreht werden, wodurch die Gefahr eines Verrutschens der Portion 5 weiter verringert werden kann.

Durch eine ebenfalls nicht gezeigte, mit dem Antrieb gekoppelte Steuerung kann ferner erreicht werden, dass die Fördereinrichtungen 7, 9 zum Wenden einer Scheibe oder Portion um 180 Grad gedreht werden und dabei jeweils mit im Wesentlich horizontal ausgerichteten Auflageflächen 17, 19 zum Stehen kommen.

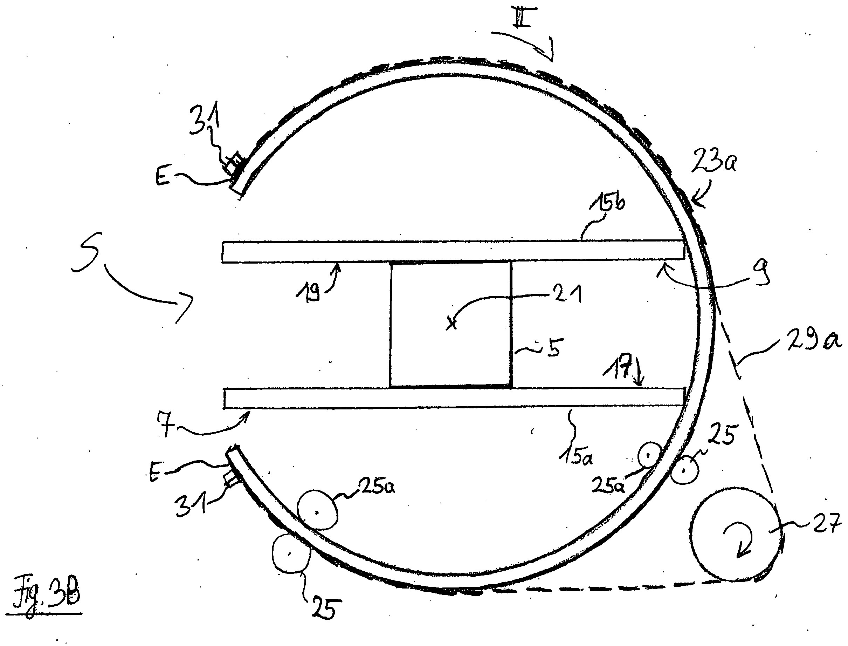

Bei der in Fig. 3B gezeigten Variante sind wiederum die Fördereinrichtungen 7, 9 an zumindest zwei längs der Förderrichtung I versetzt zueinander angeordneten Rahmenelementen 23a eines drehbaren Rahmens befestigt. Dabei ist jedes Rahmenelement 23a teilring- bzw. C-förmig ausgebildet und daher an einer Seite S offen. Die Fördereinrichtungen 7, 9 sind an den der offenen Seite S gegenüberliegenden Seiten der Rahmenelemente 23a befestigt. Ferner sind jeweils die Rollen 25 nur im unteren Bereich zur Abstützung des Rahmenelements 23a vorgesehen, wobei jeder Rolle 25 eine ihr gegenüberliegende Gegenrolle 25a zugeordnet ist, die das jeweilige Rahmenelement 23a an seiner Innenseite abstützt. Selbstverständlich können die Abstützrollen 25 aber auch wie bei der Variante der Fig. 3A angeordnet sein oder umgekehrt, die Rollen 25 der Variante der Fig. 3A können zusammen mit Gegenrollen 25a, wie Fig. 3B zeigt, angeordnet sein.

Außerdem ist der Riemen 29a nicht als umlaufender Riemen ausgeführt. Vielmehr ist jeweils ein Ende E des Riemens 29a mittels einer Befestigungseinrichtung 31, wie etwa eine Schraube, im Bereich der offenen Seite S am Rahmenelement 23a befestigt. Die Länge des Riemens 29a und die Anordnung des Rahmenelements 23a und der Scheibe 27 relativ zueinander sind dabei so gewählt, dass die beiden Fördereinrichtungen 7, 9 durch entsprechendes Verdrehen des Rahmens um 180 Grad um die Drehachse 21 hin- und hergedreht werden können. Der Riemenantrieb kann wiederum nur an einem der Rahmenelemente 23a wirksam sein. Alternativ kann der Riemenantrieb auf alle Rahmenelemente 23a wirken oder es kann für jedes Rahmenelement 23a ein eigener Antrieb vorgesehen sein, wobei die Antriebe derart angesteuert werden, dass sie gemeinsam den Rahmen in der gewünschten Weise verdrehen.

Wie Fig. 3B außerdem zeigt, sind die beiden Fördereinrichtungen 7, 9 von der offenen Seite S her zugänglich, so dass ein Förderband (nicht gezeigt) an jeder Fördereinrichtung 7, 9 auf einfache Weise montiert bzw. demontiert werden kann. Entsprechendes gilt für mehrere parallele Förderbänder bzw. Förderriemen.

Wie Fig. 1 zeigt, sind die Auflageflächen des Eingangs- und Ausgangsförderers 11, 13 sowie die Auflagefläche der jeweils unten liegenden Fördereinrichtung 7, 9 bevorzugt in der Horizontalen relativ zueinander ausgerichtet, so dass diese eine zusammenhängende, ineinander übergehende Förderstrecke bilden. Eine Portion 5 kann somit ohne weiteres von dem Eingangsförderer 11 zu den Fördereinrichtungen 7, 9 bzw. von den Fördereinrichtungen 7, 9 zum Ausgangsförderer 13 transportiert werden. Außerdem erstreckt sich die bevorzugt mittig zwischen den beiden Auflageflächen 17, 19 verlaufende Drehachse 21 vorzugsweise auf Höhe des halben Abstands A zwischen den beiden Auflageflächen 17, 19 der Fördereinrichtungen 7, 9 oberhalb der Förderstrecke. Nach einer erfolgten Drehung der Fördereinrichtungen 7, 9 um 180 Grad um die Drehachse 21 vertauschen somit die Fördereinrichtungen 7, 9 ihre Positionen so, dass die nach der Drehung unten liegende Fördereinrichtung 7, 9 sowie der Eingangs- und Ausgangsförderer 11, 13 ebenfalls eine zusammenhängende, ineinander übergehende Förderstrecke bilden. Ein Höhenausgleich zwischen den Fördereinrichtungen 7, 9 und dem Eingangsförderer 11 bzw. dem Ausgangsförderer 13 muss daher in diesem Fall nicht vorgesehen werden.

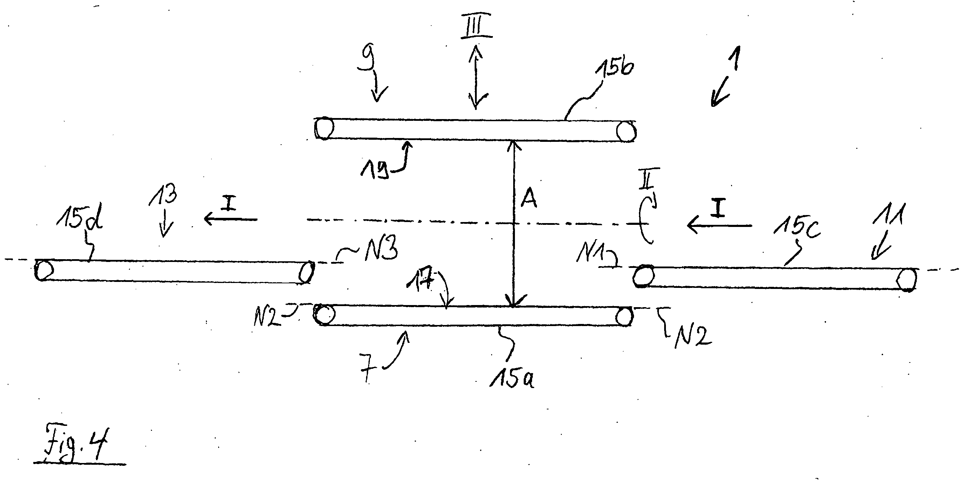

Wie mit Bezug auf Fig. 4 näher erläutert wird, wird als Förderniveau N1 des Eingangsförderers 11 die Höhe über dem Boden bezeichnet, auf der sich die Produktauflage des Eingangsförderers 11 befindet. Das Förderniveau N1 entspricht somit der Höhe, auf der eine Scheibe oder Portion vom Eingangsförderer 11 gefördert wird. Als Förderniveau N2 der Fördereinrichtungen 7, 9 wird die Höhe bezeichnet, auf der sich die Auflagefläche 17, 19 der jeweils gerade unten liegenden Fördereinrichtung 7, 9 befindet. Außerdem wird als Förderniveau N3 des Ausgangsförderers 13 die Höhe bezeichnet, auf der sich die Produktauflage des Ausgangsförderers 13 befindet.

Um das Förderniveau N2 und das Förderniveau N1 bzw. das Förderniveau N2 und das Förderniveau N3 aneinander anpassen zu können, können die beiden Fördereinrichtungen 7, 9 in vertikaler Richtung III gemeinsam verstellbar, insbesondere absenkbar oder anhebbar, sein. Eine derartige Möglichkeit zur Höhenverstellung der Fördereinrichtungen 7, 9 ist insbesondere dann vorteilhaft, wenn der Abstand A zwischen den beiden Fördereinrichtungen 7, 9 verändert werden kann, da eine Abstandsverstellung eine Anpassung der Förderniveaus erforderlich machen kann.

Bei der Vorrichtung 1 können anstelle der Förderbänder 15a bis 15d auch jeweils mehrere längs der Förderrichtung I verlaufende, parallele umlaufende Förderbänder oder Förderriemen eingesetzt werden (nicht gezeigt).

Die dargestellte Vorrichtung 1 eignet sich, wie beschrieben, zum Wenden von Scheiben 3 oder Portionen 5. Eine erfindungsgemäße Vorrichtung kann im Allgemeinen jedoch auch zum Umorientieren einer Scheibe oder Portion um einen von 180 Grad verschiedenen Umorientierungswinkel eingesetzt werden. Beispielsweise wäre es denkbar, dass eine dicke Scheibe um nur 90 Grad gedreht, d.h. gewissermaßen auf die Seite gelegt, und dann mittels eines Ausgangsförderers abtransportiert wird.

Außerdem kann eine erfindungsgemäße Vorrichtung auch einem mehrspurigen Slicer nachgeordnet sein. Die umzuorientierenden bzw. zu wendenden Scheiben oder Portionen laufen in diesem Fall in zwei oder mehr nebeneinanderliegenden Spuren ein und können nebeneinanderliegend gemeinsam umorientiert bzw. gewendet werden. Dies kann mit einer einzigen Vorrichtung für alle Spuren gleichzeitig oder spurindividuell mit mehreren, jeweils einer Spur zugeordneten Vorrichtungen zeitversetzt oder gleichzeitig erfolgen.

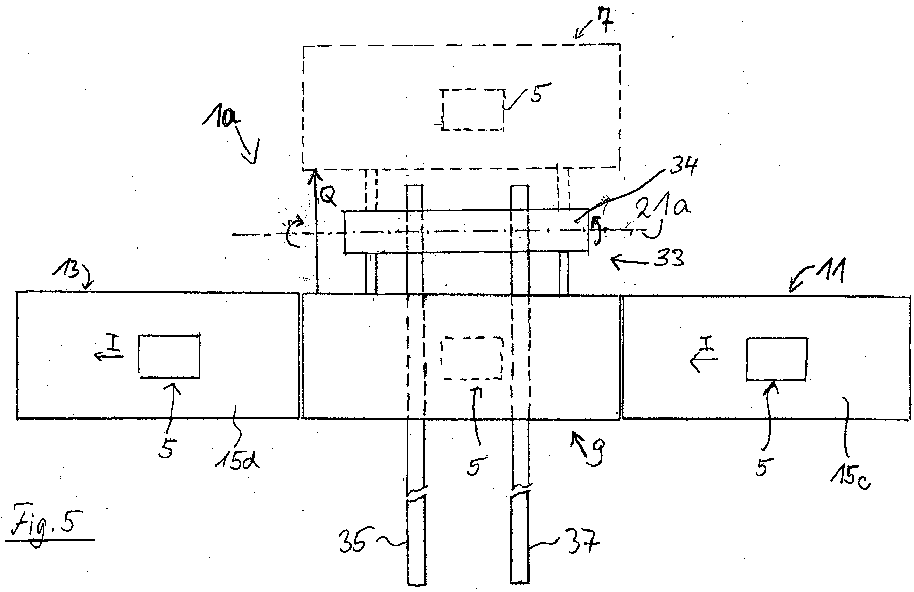

Die in Fig. 5 gezeigte alternative Variante einer erfindungsgemäßen Vorrichtung 1a weist ebenfalls zwei Fördereinrichtungen 7, 9 auf, die an einer drehbaren Halterung 34 einer Querversatzausgleichseinrichtung 33 befestigt sind. Wie Fig. 5 zeigt, verläuft die Drehachse 21 a, um die die beiden Fördereinrichtungen 7, 9 gemeinsam um 180 Grad hin- und her gedreht bzw. hin- und her verschwenkt werden können, durch die Halterung 34. Bei der Vorrichtung 1a liegt die Drehachse 21 a somit nicht mittig zwischen den beiden Fördereinrichtungen 7, 9, sondern sie verläuft in horizontaler Richtung und quer zur Förderrichtung I versetzt zur Mittelachse der beiden Fördereinrichtungen 7, 9. Bei einer Drehung um 180 Grad um die Drehachse 21 a erfahren die Fördereinrichtungen 7, 9 bezogen auf die Förderrichtung I daher einen Querversatz Q (vgl. die in Fig. 5 vor der Drehung oben liegende zweite Fördereinrichtung 9 und die gestrichelt eingezeichnete, nach der Drehung oben liegende erste Fördereinrichtung 7).

Die Querversatzausgleichseinrichtung 33 umfasst eine horizontal und quer zur Förderrichtung I verlaufende antreibbare Spindel 35 sowie eine dazu parallele Linearführung 37 z.B. in Form einer Gleitstange, auf denen die Halterung 34 gelagert ist. Alternativ kann anstelle der reinen Gleitführung 37 eine zweite Spindel verwendet werden. Durch Betätigen der Spindel 35 kann die Halterung 34 zur Kompensation des Querversatzes Q quer zur Förderrichtung I derart verfahren werden, dass die Fördereinrichtungen 7, 9 in Förderrichtung I gesehen wieder zwischen den Eingangsförderer 11 und den Ausgangsförderer 13 gebracht werden. Die gewendete Portion 5 kann somit abtransportiert und eine neue zu wendende Portion 5 kann wieder zwischen die Auflageflächen 17, 19 der beiden Fördereinrichtungen 7, 9 gebracht werden. Die neue Portion 5 kann dann erneut durch Verschwenken der beiden Fördereinrichtungen 7, 9 gewendet werden.

Entsprechend den vorhergehenden Ausführungen werden bei der Vorrichtung 1a zum Wenden einer Scheibe oder Portion zuerst die beiden Fördereinrichtungen 7, 9 um die gemeinsame Drehachse 21 a verdreht bzw. verschwenkt und anschließend wird der sich ergebende Querversatz Q ausgeglichen. Es ist jedoch auch möglich, dass der Querversatz Q bereits während des Verschwenkens der beiden Fördereinrichtungen 7, 9 ausgeglichen wird, so dass durch diese Überlagerung von Schwenkbewegung und Querversatzbewegung bereits nach Abschluss der Schwenkbewegung die Fördereinrichtungen 7, 9 sich wieder zwischen dem Eingangsförderer 11 und dem Ausgangsförderer 13 befinden.

### Bezugszeichen

- 1, 1a: Vorrichtung
- 3: Scheibe
- 5: Portion
- 7: erste Fördereinrichtung
- 9: zweite Fördereinrichtung
- 11: Eingangsförderer
- 13: Ausgangsförderer
- 15a: erstes Förderband
- 15b: zweites Förderband
- 15c: drittes Förderband
- 15d: viertes Förderband
- 17: erste Auflagefläche
- 19: zweite Auflagefläche
- 21, 21 a: Drehachse
- 23, 23a: Rahmenelement
- 25: Rolle
- 25a: Gegenrolle
- 27: Scheibe
- 29, 29a: Riemen
- 31: Befestigungseinrichtung
- 33: Querversatzausgleichseinrichtung
- 34: Halterung
- 35: Spindel
- 37: Führung
- I: Förderrichtung
- II: Drehrichtung
- III: vertikale Richtung
- A: Abstand
- N1: Förderniveau
- N2: Förderniveau
- N3: Förderniveau
- S: offene Seite
- Q: Querversatz

## Patentansprüche

1. Vorrichtung (1, 1a) zum Umorientieren, insbesondere zum Wenden, einer Scheibe (3) oder einer mehrere Scheiben (3) umfassenden Portion (5), insbesondere eines mittels eines Hochgeschwindigkeitsslicers aufgeschnittenen Lebensmittelprodukts, mit einer ersten Fördereinrichtung (7), die eine erste Auflagefläche (17) aufweist, und mit einer zweiten Fördereinrichtung (9), die eine der ersten Auflagefläche (17) zugewandte zweite Auflagefläche (19) aufweist, wobei die beiden Fördereinrichtungen (7, 9) gemeinsam um eine zumindest näherungsweise in Förderrichtung (I) verlaufende Drehachse (21, 21a) um einen Umorientierungswinkel verdrehbar sind,
**dadurch gekennzeichnet, dass** die Vorrichtung eine Steuerung umfasst, wodurch
die Scheibe (3) oder Portion (5) auch während des Umorientierens mittels zumindest einer der beiden Fördereinrichtungen (7, 9) in Förderrichtung (I) gefördert werden kann.

2. Vorrichtung nach Anspruch 1,
**dadurch gekennzeichnet, dass**
der Umorientierungswinkel zum Wenden der Scheibe (3) oder Portion (5) zumindest näherungsweise 180 Grad beträgt.

3. Vorrichtung nach Anspruch 1 oder 2,
**dadurch gekennzeichnet, dass**
die beiden Fördereinrichtungen (7, 9) quer zur Förderrichtung (I) betrachtet versetzt zueinander angeordnet sind.

4. Vorrichtung nach einem der vorhergehenden Ansprüche,
**dadurch gekennzeichnet,**
**dass** die beiden Fördereinrichtungen (7, 9) gleich aufgebaut sind, insbesondere bezüglich der Drehachse (21) symmetrisch ausgebildet und angeordnet sind, und/oder
**dass** die beiden Fördereinrichtungen (7, 9) in Förderrichtung (I) betrachtet gleich lang sind.

5. Vorrichtung nach einem der vorhergehenden Ansprüche,
**dadurch gekennzeichnet, dass**
jede der beiden Fördereinrichtungen (7, 9) ein umlaufendes Förderband (15a, 15b) oder mehrere parallele umlaufende Förderbänder aufweist, wobei das Förderband (15a, 15b) bzw. die Förderbänder der jeweiligen Fördereinrichtung (7, 9) die jeweilige erste bzw. zweite Auflagefläche (17, 19) bildet bzw. bilden, wobei insbesondere das Förderband (15a) bzw. die Förderbänder der ersten Fördereinrichtung (7) relativ zu dem Förderband (15b) bzw. den Förderbändern der zweiten Fördereinrichtung (9) mit umgekehrtem Drehsinn und mit der betragsmäßig gleichen Geschwindigkeit betreibbar ist bzw. betreibbar sind.

6. Vorrichtung nach einem der vorhergehenden Ansprüche,
**dadurch gekennzeichnet, dass**
den beiden Fördereinrichtungen (7, 9) in Förderrichtung (I) betrachtet ein, insbesondere ein umlaufendes Förderband (15c) oder mehrere parallele umlaufende Förderbänder aufweisender, Eingangsförderer (11) vorgeordnet ist.

7. Vorrichtung nach einem der vorhergehenden Ansprüche,
**dadurch gekennzeichnet, dass**
den beiden Fördereinrichtungen (7, 9) in Förderrichtung (I) betrachtet ein, insbesondere ein umlaufendes Förderband (15d) oder mehrere parallele umlaufende Förderbänder aufweisender, Ausgangsförderer (13) nachgeordnet ist.

8. Vorrichtung nach einem der vorhergehenden Ansprüche,
**dadurch gekennzeichnet, dass**
die beiden Auflageflächen (17, 19) aneinander anliegen oder in einem Abstand (A) voneinander beabstandet sind, und/oder dass sich ein Abstand (A) zwischen den beiden Auflageflächen (17, 19) in Förderrichtung (I) gesehen verkleinert, und/oder dass ein Abstand (A) zwischen den beiden Auflageflächen (17, 19) veränderbar ist.

9. Vorrichtung nach einem der vorhergehenden Ansprüche,
**dadurch gekennzeichnet, dass**
ein Förderniveau (N2) der Fördereinrichtungen (7, 9) und ein Förderniveau (N1) eines in Förderrichtung (I) betrachtet vorgeordneten Eingangsförderers (11) aneinander anpassbar sind, und/oder dass ein Förderniveau (N2) der Fördereinrichtungen (7, 9) und ein Förderniveau (N3) eines in Förderrichtung (I) betrachtet nachgeordneten Ausgangsförderers (13) aneinander anpassbar sind.

10. Vorrichtung nach einem der vorhergehenden Ansprüche,
**dadurch gekennzeichnet, dass**
die beiden Fördereinrichtungen (7, 9) in vertikaler Richtung (III) gemeinsam verfahrbar, insbesondere absenkbar und anhebbar, sind, und/oder dass
die Drehachse (21, 21a) in vertikaler Richtung (III) verstellbar ist.

11. Vorrichtung nach einem der vorhergehenden Ansprüche,
**dadurch gekennzeichnet, dass**
ein um die Drehachse (21) drehbarer Rahmen vorgesehen ist, an dem die Fördereinrichtungen (7, 9) befestigt sind und der mit einem Antrieb zum Verdrehen der beiden Fördereinrichtungen (7, 9) gekoppelt ist, wobei insbesondere
der Rahmen wenigstens ein, bevorzugt an wenigstens einer Seite offenes oder ringförmiges, Rahmenelement (23, 23a) aufweist, das in einer quer zu Förderrichtung (I) verlaufenden Ebene um die beiden Fördereinrichtungen (7, 9) herum verläuft und das an mehreren, insbesondere ortsfesten, versetzt zueinander angeordneten Führungsrollen (25, 25a) drehbar gelagert ist.

12. Vorrichtung nach einem der vorhergehenden Ansprüche,
**dadurch gekennzeichnet,**
**dass** die Drehachse (21a) seitlich versetzt zu einer Mittelachse der beiden Fördereinrichtungen (7, 9) verläuft, und dass die beiden Fördereinrichtungen (7, 9) mit einer Querversatzausgleichseinrichtung (33) gekoppelt sind, mittels der ein von einer Verdrehung der beiden Fördereinrichtungen (7, 9) um die Drehachse (21a) bewirkter Querversatz (Q) kompensiert werden kann.

13. Verfahren zum Umorientieren, insbesondere Wenden, einer Scheibe (3) oder einer mehrere Scheiben (3) umfassenden Portion (5), insbesondere eines mittels eines Hochgeschwindigkeitsslicers aufgeschnittenen Lebensmittelprodukts, bei dem:
- die Scheibe (3) oder Portion (5) zwischen eine erste Auflagefläche (17) einer ersten Fördereinrichtung (7) und eine der ersten Auflagefläche (17) zugewandte zweite Auflagefläche (19) einer zweiten Fördereinrichtung (9) gebracht wird, und
- die beiden Fördereinrichtungen (7, 9) gemeinsam um eine zumindest näherungsweise in Förderrichtung (I) verlaufende Drehachse (21) um einen Umorientierungswinkel gedreht werden,
**dadurch gekennzeichnet, dass** die Scheibe (3) oder Portion (5) auch während der Drehbewegung in Förderrichtung (I) gefördert wird.

14. Verfahren nach Anspruch 13,
**dadurch gekennzeichnet, dass** zum Wenden der Scheibe (3) oder Portion (5) die beiden Fördereinrichtungen (7, 9) um einen Umorientierungswinkel von zumindest näherungsweise 180 Grad gedreht werden, und/oder dass die Scheibe (3) oder Portion (5), insbesondere während der Drehbewegung, von beiden Auflageflächen (17, 19) gehalten wird.

## Claims

1. An apparatus (1, 1a) for reorienting, in particular for turning, a slice (3) or a portion (5) comprising a plurality of slices (3), in particular a food product sliced by means of a high-speed slicer, having a first conveying device (7) which has a first support surface (17) and having a second conveying device (9) which has a second support surface (19) facing the first support surface (17), wherein the two conveying devices (7, 9) are rotatable together by a reorientation angle about an axis of rotation (21, 21a) which at least approximately extends in a conveying direction (I),
**characterized in that**
the apparatus comprises a control, whereby the slice (3) or the portion (5) can also be conveyed in the conveying direction (I) by means of at least one of the two conveying devices (7, 9) during the reorientation.

2. An apparatus in accordance with claim 1,
**characterized in that**
the reorientation angle at least approximately amounts to 180 degrees to turn the slice (3) or the portion (5).

3. An apparatus in accordance with claim 1 or claim 2,
**characterized in that**
the two conveying devices (7, 9) are arranged offset from one another, viewed transversely to the conveying direction (I).

4. An apparatus in accordance with any one of the preceding claims,
**characterized in that**
the two conveying devices (7, 9) are designed the same, are in particular configured and arranged symmetrically with respect to the axis of rotation (21); and/or
**in that** the two conveying devices (7, 9) are of equal length, viewed in the conveying direction (I).

5. An apparatus in accordance with any one of the preceding claims,
**characterized in that**
each of the two conveying devices (7, 9) has a revolving conveyor belt (15a, 15b) or a plurality of parallel revolving conveyor belts, with the conveyor belt (15a, 15b) or the conveyor belts of the respective conveying device (7, 9) forming the respective first support surface or second support surface (17, 19), and with the conveyor belt (15a) or the conveyor belts of the first conveying device (7) in particular being able to be operated relative to the conveyor belt (15b) or to the conveyor belts of the second conveying device (9) with a reverse sense of rotation and at the same speed by amount.

6. An apparatus in accordance with any one of the preceding claims,
**characterized in that**
an incoming conveyor (11) is arranged upstream of the two conveying devices (7, 9), viewed in the conveying direction (I), and in particular has a revolving conveyor belt (15c) or a plurality of parallel revolving conveyor belts.

7. An apparatus in accordance with any one of the preceding claims,
**characterized in that**
an outgoing conveyor (13) is arranged downstream of the two conveying devices (7, 9), viewed in the conveying direction (I), and in particular has a revolving conveyor belt (15d) or a plurality of parallel revolving conveyor belts.

8. An apparatus in accordance with any one of the preceding claims,
**characterized in that**
the two support surfaces (17, 19) contact one another or are spaced apart from one another at a spacing (A); and/or **in that** a spacing (A) between the two support surfaces (17, 19) is reduced in size, viewed in the conveying direction (I); and/or **in that** a spacing (A) between the two support surfaces (17, 19) is variable.

9. An apparatus in accordance with any one of the preceding claims,
**characterized in that**
a conveying level (N2) of the conveying devices (7, 9) and a conveying level (N1) of an incoming conveyor (11) arranged upstream, viewed in the conveying direction (I), can be adapted to one another; and/or in that a conveying level (N2) of the conveying devices (7, 9) and a conveying level (N3) of an outgoing conveyor (13) arranged downstream, viewed in the conveying direction (I), can be adapted to one another.

10. An apparatus in accordance with any one of the preceding claims,
**characterized in that**
the two conveying devices (7, 9) can be moved, in particular lowered and raised, together in a vertical direction (III);
and/or **in that**
the axis of rotation (21, 21a) is adjustable in the vertical direction (III).

11. An apparatus in accordance with any one of the preceding claims,
**characterized in that**
a frame is provided which is rotatable about the axis of rotation (21), to which the conveying devices (7, 9) are fastened and which is coupled to a drive for rotating the two conveying devices (7, 9), wherein in particular
the frame comprises at least one frame element (23, 23a) which is preferably open or ring-shaped at at least one side, which extends around the two conveying devices (7, 9) in a plane extending transversely to the conveying direction (I) and which is rotatably supported at a plurality of guide rollers (25, 25a), in particular stationary guide rollers, which are arranged offset from one another.

12. An apparatus in accordance with any one of the preceding claims,
**characterized in that**
the axis of rotation (21a) extends laterally offset from a central axis of the two conveying devices (7, 9); and **in that** the two conveying devices (7, 9) are coupled to a transverse displacement compensation device (33) by means of which a transverse displacement (Q) can be compensated which is brought about by a rotation of the two conveying devices (7, 9) about the axis of rotation (21a).

13. A method for reorienting, in particular turning, a slice (3) or a portion (5) comprising a plurality of slices (3), in particular a food product sliced by means of a high-speed slicer, in which:
- the slice (3) or the portion (5) is brought between a first support surface (17) of a first conveying device (7) and a second support surface (19) of a second conveying device (9) facing the first support surface (17); and
- the two conveying devices (7, 9) are rotated together by a reorientation angle about an axis of rotation (21) which at least approximately extends in the conveying direction (I),
**characterized in that**
the slice (3) or the portion (5) is also conveyed in the conveying direction (I) during the rotational movement.

14. A method in accordance with claim 13,
**characterized in that**
the two conveying devices (7, 9) are rotated by a reorientation angle of at least approximately 180 degrees to turn the slice (3) or the portion (5); and/or **in that**
the slice (3) or the portion (5) is held by both support surfaces (17, 19), in particular during the rotational movement.

## Revendications

1. Dispositif (1, 1a) de réorientation, en particulier pour faire tourner une tranche (3) ou une portion (5) contenant plusieurs tranches (3), en particulier d'un produit alimentaire découpé avec une trancheuse à haute vitesse, comportant un premier dispositif de convoyage (7) qui présente une première surface de dépose (17) et un deuxième dispositif de convoyage (9) qui présente une deuxième surface de dépose (19) tournée vers la première surface de dépose (17), dans lequel les deux dispositifs de convoyage (7, 9) peuvent être tournés en commun d'un angle de réorientation autour d'un axe de rotation (21, 21a) s'étendant au moins approximativement en direction de convoyage (I),
**caractérisé en ce que**
le dispositif comprend une commande grâce à laquelle la tranche (3) ou la portion (5) peut être convoyée en direction de convoyage (I) au moyen d'au moins un des deux dispositifs de convoyage (7, 9) également pendant la réorientation.

2. Dispositif selon la revendication 1,
**caractérisé en ce que**
l'angle de réorientation pour faire tourner la tranche (3) ou la portion (5) est d'au moins approximativement 180 degrés.

3. Dispositif selon la revendication 1 ou 2,
**caractérisé en ce que**
les deux dispositifs de convoyage (7, 9) sont agencés en décalage l'un par rapport à l'autre, vus transversalement à la direction de convoyage (I).

4. Dispositif selon l'une des revendications précédentes,
**caractérisé en ce que**
les deux dispositifs de convoyage (7, 9) ont la même structure, sont en particulier réalisés et agencés de manière symétrique par rapport à l'axe de rotation (21), et/ou
**en ce que** les deux dispositifs de convoyage (7, 9) ont la même longueur, vus en direction de convoyage (I).

5. Dispositif selon l'une des revendications précédentes,
**caractérisé en ce que**
chacun des deux dispositifs de convoyage (7, 9) présente une bande convoyeuse (15a, 15b) circulant sans fin ou plusieurs bandes convoyeuses parallèles circulant sans fin, la bande convoyeuse (15a, 15b) ou les bandes convoyeuses du dispositif de convoyage (7, 9) respectif formant la première ou la deuxième surface de dépose (17, 19) respective, la bande de convoyage (15a) ou les bandes de convoyage du premier dispositif de convoyage (7) pouvant en particulier fonctionner, par rapport à la bande de convoyage (15b) ou aux bandes de convoyage du deuxième dispositif de convoyage (9), dans le sens de rotation contraire et avec la même vitesse.

6. Dispositif selon l'une des revendications précédentes,
**caractérisé en ce que**
en amont des deux dispositifs de convoyage (7, 9), vus en direction de convoyage (I), est agencé un convoyeur d'entrée (11) présentant en particulier une bande de convoyage (15a) circulant sans fin ou plusieurs bandes de convoyage circulant sans fin parallèles.

7. Dispositif selon l'une des revendications précédentes,
**caractérisé en ce que**
en aval des deux dispositifs de convoyage (7, 9), vus en direction de convoyage (I), est agencé un convoyeur de sortie (13) présentant en particulier une bande de convoyage (15a) circulant sans fin ou plusieurs bandes de convoyage circulant sans fin parallèles.

8. Dispositif selon l'une des revendications précédentes,
**caractérisé en ce que**
les deux surfaces de dépose (17, 19) se touchent ou sont espacées l'une de l'autre par un espace (A), et/ou **en ce que** vu en direction de convoyage (I), un espace (A) entre les deux surfaces de dépose (17, 19) se réduit, et/ou **en ce qu'**un espace (A) entre les deux surfaces de dépose (17, 19) est variable.

9. Dispositif selon l'une des revendications précédentes,
**caractérisé en ce que**
un niveau de convoyage (N2) des deux dispositifs de convoyage (7, 9) et un niveau de convoyage (N1) d'un convoyeur d'entrée (11) agencé en amont, vu en direction de convoyage (I), peuvent être adaptés l'un à l'autre, et/ou **en ce qu'**un niveau de convoyage (N2) des deux dispositifs de convoyage (7, 9) et un niveau de convoyage (N3) d'un convoyeur de sortie (13) agencé en aval, vu en direction de convoyage (I), peuvent être adaptés l'un à l'autre.

10. Dispositif selon l'une des revendications précédentes,
**caractérisé en ce que**
les deux dispositifs de convoyage (7, 9) sont déplaçables en commun en direction verticale (III), en particulier abaissables et relevables,
et/ou **en ce que**
l'axe de rotation (21, 21a) est réglable en direction verticale (III).

11. Dispositif selon l'une des revendications précédentes,
**caractérisé en ce que**
autour de l'axe de rotation (21) est prévu un cadre rotatif sur lequel sont fixés les dispositifs de convoyage (7, 9) et qui est couplé à un entraînement pour faire tourner les deux dispositifs de convoyage (7, 9), dans lequel en particulier
le cadre présente au moins un élément de cadre (23, 23a) de préférence ouvert sur un côté ou annulaire qui s'étend dans un plan transversal à la direction de convoyage (I) autour des deux dispositifs de convoyage (7, 9) et qui est monté rotatif sur plusieurs rouleaux de guidage (25, 25a) en particulier stationnaires et agencés en décalage les uns par rapport aux autres.

12. Dispositif selon l'une des revendications précédentes,
**caractérisé en ce que**
l'axe de rotation (21a) s'étend avec décalage latéral par rapport à une ligne médiane des deux dispositifs de convoyage (7, 9), et **en ce que** les deux dispositifs de convoyage (7, 9) sont couplés à un dispositif de compensation de décalage transversal (33) au moyen duquel un décalage transversal (Q) causé par une rotation des deux dispositifs de convoyage (7, 9) autour de l'axe de rotation (21a) peut être compensé.

13. Procédé de réorientation, en particulier pour tourner une tranche (3) ou une portion (5) contenant plusieurs tranches (3), en particulier d'un produit alimentaire découpé au moyen d'une trancheuse à haute vitesse, dans lequel :
- la tranche (3) ou la portion (5) est amenée entre une première surface de dépose (17) d'un premier dispositif de convoyage (7) et une deuxième surface de dépose (19), tournée vers la première surface de dépose (17), d'un deuxième dispositif de convoyage (9), et
- les deux dispositifs de convoyage (7, 9) sont tournés en commun d'un angle de réorientation autour d'un axe de rotation (21) s'étendant au moins approximativement en direction de convoyage (I),
**caractérisé en ce que**
la tranche (3) ou la portion (5) est convoyée en direction de convoyage (I) également pendant le mouvement de rotation.

14. Procédé selon la revendication 13,
**caractérisé en ce que**
pour tourner la tranche (3) ou la portion (5) les deux dispositifs de convoyage (7, 9) sont tournés d'un angle de réorientation d'au moins approximativement 180 degrés, et/ou **en ce que**
la tranche (3) ou la portion (5) est maintenue par les deux surfaces de dépose (17, 19) en particulier pendant le mouvement de rotation.
